# FASCICULE DE BREVET EUROPEEN

(11) **EP 0 712 771 B1**
(45) Date de publication et mention de la délivrance du brevet: **16.06.1999**
(21) Numéro de dépôt: 95402510.2
(22) Date de dépôt: 09.11.1995
(51) Int. Cl.: B61D 45/00, B60P 7/12

(54) **Dispositif de calage automatique de pièces cylindriques et wagon utilisant un tel dispositif**
Automatische Blockiervorrichtung von walzenförmigen Teilen und Wagen mit solch einer Vorrichtung
Device for automatically securing cylindrical pieces and railway wagon utilizing such a device

(30) Priorité: 15.11.1994 FR 9413650
(43) Date de publication de la demande: 22.05.1996
(73) Titulaire: SOCIETE NATIONALE DES CHEMINS DE FER FRANCAIS, F-75436 Paris Cedex 09 (FR); France Wagons, 75009 Paris (FR)
(72) Inventeur: Matton, Gérard, F-77240 Cesson (FR); Gournet, Francis, F-94350 Villiers sur Marne (FR)
(74) Mandataire: Casalonga, Axel

(56) Documents cités:
- DE-A- 1 605 031
- DE-A- 2 429 715
- FR-A- 2 411 730
- FR-A- 2 497 162
- FR-A- 2 689 827
- GB-A- 1 584 829

## Description

La présente invention concerne un dispositif de calage automatique de pièces cylindriques, notamment de rouleaux de tôle, pour leur transport, en particulier pour leur transport par fer, et un wagon utilisant un tel dispositif.

Le transport ferroviaire de rouleaux de tôle pose des problèmes d'encombrement, de stabilité, de température et de sécurité. Dans l'art antérieur, il est connu de charger les rouleaux sur des wagons de marchandises à fond plat. Les rouleaux portent sur une de leurs sections planes et non sur leur circonférence de façon à être stables. Ce type de chargement implique une importante perte de place sur le wagon et est donc peu économique pour l'utilisateur.

Il est aussi connu d'utiliser des wagons de marchandises spéciaux, munis de berceaux transversaux. Chaque wagon est muni de plusieurs berceaux. Chaque berceau se compose d'un support et de deux butées de maintien latéral. Le support est constitué de deux plaques rectangulaires inclinées en vis-à-vis, formant un canal à section en V (Voir document DE-A-2 429 715). Une troisième plaque rectangulaire horizontale est parfois disposée entre les deux plaques inclinées et constitue le fond du berceau. Les butées de maintien sont disposées aux extrémités latérales du wagon afin d'éviter que le rouleau ne glisse sur le côté et ne tombe du wagon. Ce dispositif permet de charger un nombre satisfaisant de rouleaux par wagon. Toutefois, il ne permet pas un calage du rouleau dans le sens transversal. En effet, le rouleau peut glisser dans le sens de la largeur du wagon et venir en contact avec les butées de maintien latéral.

Afin de respecter les normes de sécurité ferroviaires, il faut que le wagon soit équilibré, c'est-à-dire que le rapport des masses par roue d'un essieu ne doit pas être supérieur à 1,25/1. Le respect de ce rapport lors du chargement est difficile, car le conducteur de l'engin de manutention ne dispose d'aucun repère précis pour placer le rouleau. La difficulté est encore accrue lorsque deux rouleaux sont chargés côte à côte sur le même berceau. Les deux rouleaux peuvent être de masses différentes et le conducteur de l'engin de manutention, connaissant leurs masses respectives, doit les charger d'une manière assurant l'équilibre des masses. Cette opération nécessite la présence de personnel sur les wagons pour guider le conducteur de l'engin de manutention. Outre le coût important qu'elle entraîne, la présence de personnel sur les wagons pose un problème de sécurité lorsque les rouleaux sont des rouleaux de tôle sortant d'aciérie à haute température, parfois plusieurs centaines de degrés.

Les problèmes à résoudre, pour un chargement satisfaisant, sûr et économique, sont les suivants :
- calage latéral et longitudinal,
- rouleaux de dimensions variables,
- guidage du conducteur de l'engin de manutention,
- absence de personnel sur les wagons,
- nombre satisfaisant de rouleaux par wagon.

La présente invention a pour objet de proposer un dispositif pour le transport de pièces cylindriques, permettant le chargement d'une ou plusieurs pièces cylindriques par dispositif et le calage latéral et longitudinal de ces pièces.

La présente invention a aussi pour objet de proposer un dispositif pour le transport de pièces cylindriques dont la température peut atteindre plusieurs centaines de degrés. Un tel dispositif permet le guidage du conducteur de l'engin de manutention en l'absence de personnel supplémentaire à proximité, en particulier sur les véhicules de transport.

Un autre objet de l'invention est de proposer un dispositif pour le transport et le calage de pièces cylindriques, de dimensions variables.

Le dispositif de calage automatique de pièces cylindriques, notamment de rouleaux de tôle pour leur transport, selon l'invention, comprend un support horizontal comportant deux faces d'appui inclinées, adaptées pour entrer en contact avec la surface cylindrique des rouleaux dont l'axe est horizontal.

Selon l'invention, au moins une des faces d'appui comprend une rangée de bras indépendants, articulés. Chaque rangée de bras est articulée autour d'un axe horizontal d'articulation. Chaque bras est muni d'un moyen de rappel qui, en l'absence de pièces cylindriques, le maintient en position haute. Lors du chargement de la pièce cylindrique, chaque bras qui est au contact de ladite pièce cylindrique, s'abaisse pour venir au contact d'une butée. La largeur des bras articulés est telle par rapport à la largeur d'une pièce cylindrique que ladite pièce cylindrique reste adjacente à au moins un bras en position haute lors du transport, c'est-à-dire soit à un bras en position haute lors du transport et à un bord du dispositif, soit à deux bras en position haute lors du transport.

Lorsque le dispositif de calage ne comprend qu'une rangée de bras articulés, la face d'appui démunie de bras est avantageusement constituée d'une plaque rectangulaire, d'une rangée de bras fixes ou d'un autre moyen permettant le calage transversal des rouleaux et le fonctionnement de la rangée de bras articulés de l'autre face d'appui.

Dans un mode de réalisation préféré de l'invention, le dispositif de calage automatique de pièces cylindriques comprend deux rangées de bras, une par face d'appui. La précision de calage transversal des pièces cylindriques dépend de la largeur des bras articulés.

Dans un mode de réalisation de l'invention, le dispositif automatique cylindrique comprend deux rangées de bras possédant le même nombre de bras situés en vis-à-vis. La largeur d'un bras est alors sensiblement égale à la précision de calage.

Dans un autre mode de réalisation de l'invention, le dispositif de calage automatique de pièces cylindriques comprend deux rangées de bras. Les bras articulés de l'une des rangées sont décalés d'une demi-largeur de bras par rapport aux bras de l'autre rangée. La demi-largeur d'un bras est alors sensiblement égale à la précision de calage souhaitée.

Suivant différents modes de réalisation de l'invention, le moyen de rappel de chaque bras articulé est constitué par un ressort, par un contrepoids ou par un vérin par exemple hydraulique ou pneumatique.

Dans un mode de réalisation de l'invention, chaque bras articulé est constitué par un tube creux. Lorsque les pièces cylindriques chargées sur le dispositif de calage sont chaudes, le bras est chauffé par contact et une ventilation naturelle se crée par convection à l'intérieur des tubes assurant ainsi un refroidissement régulier des pièces cylindriques et évitant que la chaleur ne se propage à d'autres pièces du dispositif ou du véhicule.

Les arêtes des bras au contact avec les pièces cylindriques, c'est-à-dire les arêtes supérieures longitudinales des bras, sont avantageusement arrondies. Ainsi, les pièces cylindriques se trouvent moins marquées ou abîmées par le contact avec les bras.

Dans un mode de réalisation de l'invention, plusieurs bras articulés adjacents situés au centre d'une rangée de bras sont liés les uns aux autres et constituent un panneau central. Lorsque deux pièces cylindriques sont chargées sur le dispositif de calage, il est préférable qu'au moins un bras resté en position haute les sépare afin d'éviter tout choc entre les deux pièces cylindriques. Le panneau central assure un écartement entre les pièces cylindriques suffisant pour le passage des systèmes de manutention, par exemple 500 mm. Lorsque le conducteur de l'engin de manutention éprouve des difficultés à repérer quel est le bras du milieu, il peut repérer facilement le panneau central et déposer les pièces cylindriques de part et d'autres de celui-ci. De plus, dans le cas de pièces cylindiques à haute température, la ventilation s'effectue mieux si la distance entre les deux pièces cylindriques, au lieu d'être égale à la largeur d'un bras, est égale à un multiple de la largeur d'un bras.

Dans un mode de réalisation de l'invention, on installe une pluralité de dispositifs décrits ci-dessus sur un wagon de marchandises. Le wagon de marchandises est alors apte à transporter de façon économique toutes sortes de pièces cylindriques de dimensions, de masses et de températures variées, quelles que soient les conditions atmosphériques et dans des conditions de sécurité satisfaisantes. Le chargement d'un wagon équipé de tels dispositifs s'effectue de manière précise, avec moins de personnel. Un tel dispositif peut également être monté sur un véhicule de transport routier.

L'invention sera mieux comprise à l'étude de la description détaillée de quelques modes de réalisation pris à titre nullement limitatif et illustrés par les dessins annexés, sur lesquels :
la figure 1 est une vue d'ensemble d'un dispositif selon l'invention chargé d'un rouleau;
la figure 2 est une vue d'ensemble d'un dispositif selon l'invention chargé de deux rouleaux;
la figure 3 est une vue de dessus d'un dispositif selon l'invention, deux rouleaux étant représentés en pointillés;
la figure 4 est une vue latérale partielle du dispositif selon l'invention, le bras articulé étant représenté dans ses deux positions, haute et abaissée.

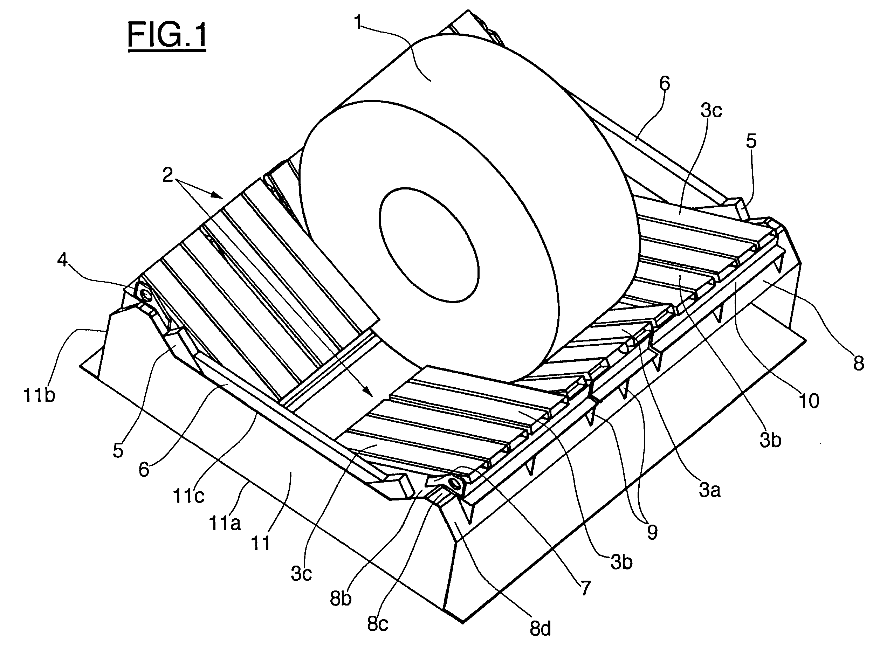

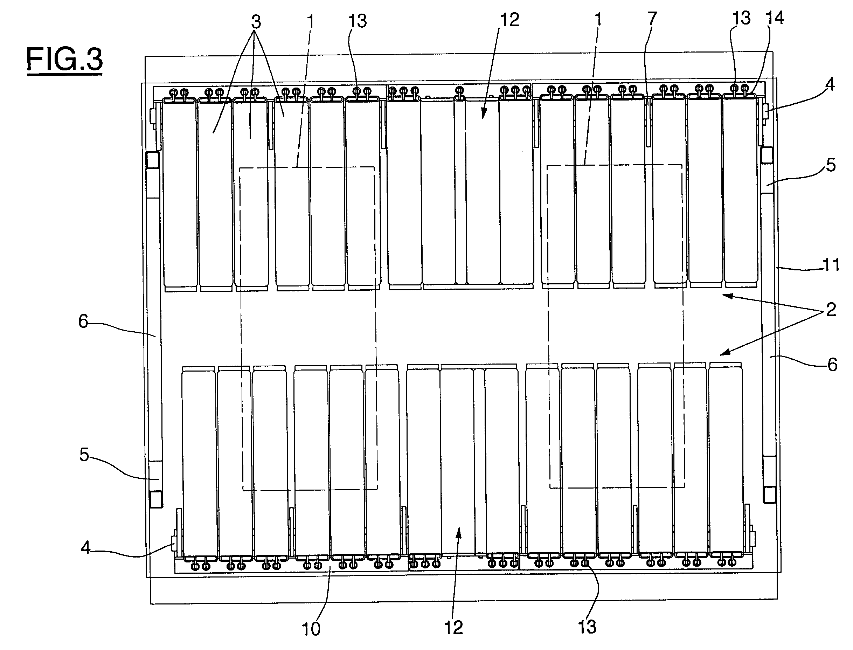

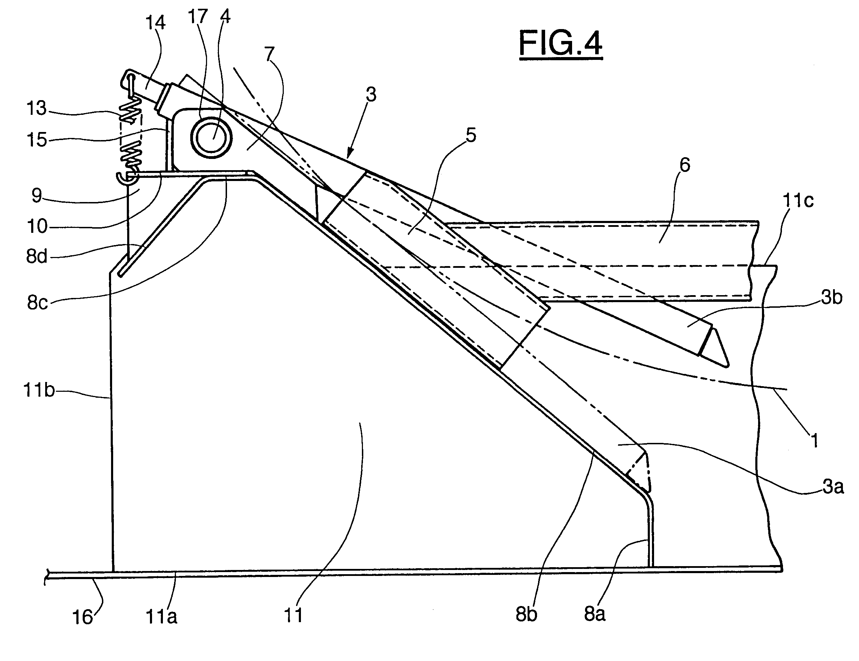

Comme illustré sur les figures 1 et 3, le dispositif de calage automatique selon l'invention est destiné à caler suivant les deux axes horizontaux un rouleau 1. Le rouleau 1 est déposé par un engin de manutention non représenté. Sa circonférence est en contact avec les deux faces d'appui 2 du dispositif. Chaque face d'appui 2 est composée d'une rangée de bras 3 articulés autour d'un axe 4. Les bras 3a sur lesquels le rouleau 1 porte, sont en position basse sous l'effet du poids du rouleau. Les bras 3b ne supportant pas le rouleau restent en position haute sous l'effet d'un moyen de rappel qui sera décrit plus loin en référence à la figure 4. Chaque bras 3 est constitué d'un tube creux à section rectangulaire et à arêtes arrondies. Les tubes sont ouverts à leurs deux extrémités pour qu'une ventilation puisse se créer. Les deux axes 4 d'articulation des bras 3 sont parallèles à l'axe du rouleau 1 et situés aux deux extrémités du dispositif.

Le dispositif est muni de quatre butées de maintien 5 fixées aux extrémités latérales de chaque face d'appui 2 de façon à ce qu'un rouleau 1 portant sur le dernier bras 3c d'une rangée de bras ne puisse pas tomber du dispositif par glissement. Les deux butées de maintien 5 d'un côté du dispositif sont liées par un bord 6 horizontal. Le bord 6 empêche le rouleau de sortir en-dehors du dispositif.

Les axes 4 d'articulation constitués par exemple de tubes ronds sont supportés par une pluralité de supports 7 disposés entre deux bras 3 d'articulation adjacents et à chaque extrémité latérale, à proximité du dernier bras 3c d'une rangée. Les supports 7 d'une rangée de bras 3 sont fixés sur une plaque 8 pliée suivant des axes horizontaux parallèles aux axes 4 d'articulation. La plaque 8 comprend une première partie verticale 8a visible sur la figure 4, une deuxième partie oblique 8b sur laquelle les bras 3 viennent en butée lorsqu'un rouleau 1 est chargé, une troisième partie horizontale 8c sur laquelle sont fixés les supports 7 et une quatrième partie oblique 8d sur laquelle sont fixés des goussets 9 de renfort. On dispose de préférence un gousset 9 par support 7. Le grand côté des goussets 9 est fixé sur la partie oblique 8d de la plaque 8. Le petit côté horizontal des goussets 9 est fixé partiellement sous les supports 7 de façon à les renforcer.

Une plaque rectangulaire horizontale 10 fixée sur le petit côté horizontal des goussets 9 joint plusieurs goussets 9 entre eux de façon à augmenter la rigidité de l'ensemble. Chaque côté du dispositif est constitué d'une plaque verticale 11 qui joint les deux plaques 8 et qui est adaptée à leurs contours. La base 11a de cette plaque est horizontale et de longueur sensiblement égale à celle du dispositif. Deux petits côtés verticaux 11b partent de la base 11a et viennent supporter la partie oblique 8d de la plaque 8. Puis la plaque 11 suit le contour imposé par la plaque 8. Le grand côté supérieur 11c de la plaque 11 est horizontal et adjacent au bord 6.

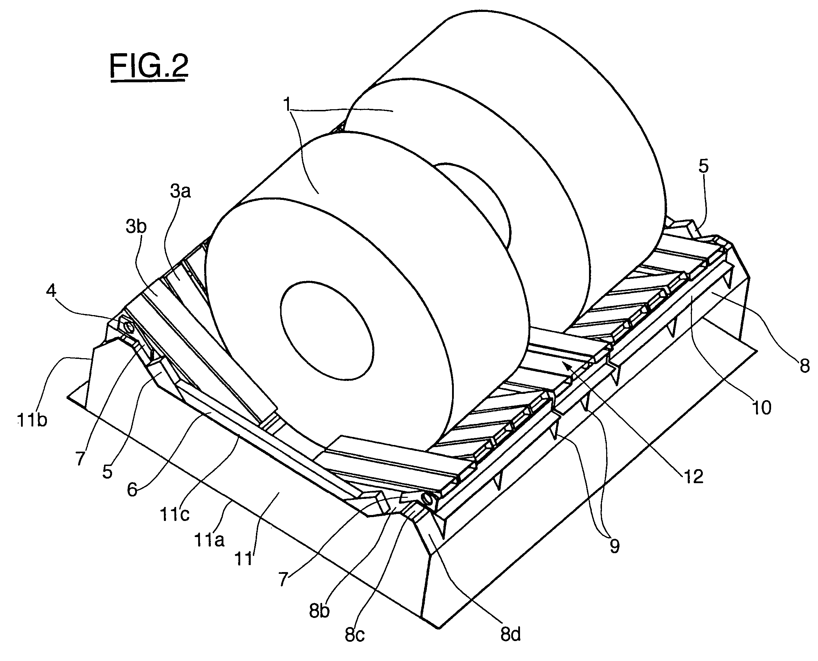

La figure 2 illustre un dispositif identique à celui de la figure 1, mais chargé de deux rouleaux 1. Chaque rouleau 1 porte sur un nombre de bras 3 dépendant de sa largeur. Comme dans le cas de la figure 1, les bras 3b restés en position haute empêchent les rouleaux 1 de se déplacer transversalement. Les trois bras situés au milieu de la rangée de bras sont liés les uns aux autres et forment un panneau central 12. Lors du chargement, il est donc obligatoire de laisser une distance supérieure à la largeur du panneau 12 entre les rouleaux 1, afin que le panneau central 12 reste en position haute et que le calage soit assuré. Cette caractéristique permet une ventilation et un refroidissement réguliers des rouleaux 1 lorsque ceux-ci sont à haute température, et le passage de systèmes de manutention entre les rouleaux 1.

Sur la figure 4, sont représentés les moyens de rappel des bras 3 articulés. Chaque bras 3 indépendant est relié à deux ressorts spirale verticaux 13. Comme on peut le voir sur la figure 3, chaque panneau central 12 est relié à une pluralité de ressorts 13. Chaque ressort 13 est accroché à une pièce de liaison 14 fixée au tube constituant le bras 3. L'autre extrémité des ressorts 13 est accrochée sur la plaque 10.

Comme on peut le voir sur la figure 3, dans le mode de réalisation illustré, une des faces d'appui 2 est décalée d'une demi-largeur de bras par rapport à l'autre face d'appui 2. Lors du chargement d'un rouleau 1, le bras 3b resté en position haute le plus proche du rouleau 1 est alors situé à une distance du rouleau 1 inférieure ou sensiblement égale à une demi-largeur de bras 3 comme on peut le voir sur la représentation en pointillés sur la figure 3 des rouleaux 1, et ce quelle que soit la largeur de chaque rouleau 1.

L'axe 4 d'articulation de l'ensemble des bras 3 d'une face d'appui 2 est constitué d'un tube supporté par six supports 7. Les butées de maintien 5 et les bords 6 empêchent les rouleaux 1 de glisser en-dehors du dispositif.

Dans la vue partielle représentée figure 4, le dispositif est supporté par le fond 16 d'un véhicule de transport. La butée de maintien 5 est fixée sur la partie oblique 8b de la plaque 8. Le bord horizontal 6 est fixé sur la butée de maintien 5. Lorsqu'un rouleau 1 est chargé, le bras 3a vient en appui sur la partie oblique 8b de la plaque 8. Lorsque le bras 3 est en position haute (référence 3b) sous l'action du ressort 13, une butée 15 limite le mouvement de rotation du bras 3. La butée 15 est fixée sur la plaque rectangulaire 10. La plaque rectangulaire 10 est fixée sur le gousset 9 et sur la partie horizontale 8c de la plaque 8. L'axe 4 est muni de paliers 17.

Grâce à l'invention, on comprend qu'il devient possible de charger sans précaution particulière un rouleau à axe horizontal qui est alors automatiquement calé par les bras 3b restés en position haute, la précision de positionnement ne dépendant que de la largeur des bras articulés 3.

Bien que dans l'exemple illustré on ait prévu des bras articulés 3 sur les deux faces d'appui 2 du dispositif, on comprendra que dans certaines applications une seule rangée de bras articulés 3 sur l'une des faces d'appui 2 soit suffisante.

Le dispositif revendiqué est adapté notamment au transport ferroviaire de rouleaux de tôle de températures variées. Plusieurs dispositifs peuvent être montés sur un wagon de marchandises.

## Revendications

1. Dispositif de calage automatique de pièces cylindriques, notamment de rouleaux de tôle (1) pour leur transport sur un support horizontal comportant deux faces d'appui inclinées (2) adaptées pour entrer en contact avec la surface cylindrique des rouleaux (1) dont l'axe est horizontal, au moins une des faces d'appui (2) comprend une rangée de bras (3) indépendants articulés autour d'axes (4) horizontaux, chaque bras (3) étant muni d'un moyen de rappel le maintenant en position haute en l'absence de rouleau, caractérisé en ce que ladite rangée comprend au moins trois bras, le bras s'abaissant lors du chargement du rouleau pour venir au contact d'une butée, la largeur des bras articulés étant telle par rapport à la largeur d'un rouleau que le rouleau (1) reste adjacent à au moins un bras (3b) en position haute lors du transport.

2. Dispositif selon la revendication 1, caractérisé en ce que chaque face d'appui (2) comprend un rangée de bras articulés.

3. Dispositif selon la revendication 2, caractérisé par le fait que les deux rangées de bras articulés possèdent le même nombre de bras (3) situés en vis-à-vis, la largeur d'un bras étant sensiblement égale à la précision de calage souhaitée.

4. Dispositif selon la revendication 2, caractérisé par le fait que les bras articulés d'une rangée de bras sont décalés d'une demi-largeur de bras par rapport aux bras de l'autre rangée, la demi-largeur d'un bras (3) étant sensiblement égale à la précision de calage souhaitée.

5. Dispositif selon l'une quelconque des revendications précédentes, caractérisé par le fait que le moyen de rappel du bras articulé est constitué par un ressort (13).

6. Dispositif selon l'une quelconque des revendications 1 à 4, caractérisé par le fait que le moyen de rappel du bras articulé est constitué par un contrepoids situé au-delà de l'axe d'articulation.

7. Dispositif selon l'une quelconque des revendications 1 à 4, caractérisé par le fait que le moyen de rappel du bras articulé est constitué par un vérin.

8. Dispositif de calage de rouleaux de tôle à haute température selon l'une quelconque des revendications précédentes, caractérisé par le fait que chaque bras articulé est un tube creux de façon à ce qu'une ventilation naturelle se crée et que chaque bras articulé possède des arêtes supérieures longitudinales arrondies.

9. Dispositif selon l'une quelconque des revendications précédentes, caractérisé par le fait que plusieurs bras articulés adjacents situés au centre d'une rangée sont liés les uns aux autres pour constituer un panneau central (12).

10. Wagon de marchandises comportant une pluralité de dispositifs selon l'une quelconque des revendications précédentes.

## Claims

1. Device for automatically securing cylindrical items, especially rolls of sheet metal (1) for transporting them on a horizontal support comprising two inclined support faces (2) designed to come into contact with the cylindrical surface of the rolls (1), the axis of which is horizontal, at least one of the support faces (2) comprises a row of independent arms (3) articulated about horizontal axles (4), each arm (3) being equipped with a return means keeping it in the raised position when no roll is present, characterized in that the said row comprises at least three arms, the arm dropping down as the roll is loaded to come into contact with a stop, the width of the articulated arms being such with respect to the width of a roll that the roll (1) remains adjacent to at least one arm (3b) in the raised position during transport.

2. Device according to Claim 1, characterized in that each support face (2) comprises a row of articulated arms.

3. Device according to Claim 2, characterized in that the two rows of articulated arms have the same number of arms (3) arranged opposite each other, the width of one arm being substantially equal to the desired securing accuracy.

4. Device according to Claim 2, characterized in that the articulated arms of one row of arms are offset by half an arm's width with respect to the arms of the other row, the half width of an arm (3) being substantially equal to the desired securing accuracy.

5. Device according to any one of the preceding claims, characterized in that the means of returning the articulated arm consists of a spring (13).

6. Device according to any one of Claims 1 to 4, characterized in that the means of returning the articulated arm consists of a counterweight located beyond the articulation axle.

7. Device according to any one of Claims 1 to 4, characterized in that the means of returning the articulated arm consists of a ram.

8. Device for securing rolls of sheet metal at high temperature according to any one of the preceding claims, characterized in that each articulated arm is a hollow tube so that there is natural ventilation and so that each articulated arm has rounded upper longitudinal edges.

9. Device according to any one of the preceding claims, characterized in that a number of adjacent articulated arms located at the centre of a row are linked together to form a central panel (12).

10. Goods wagon comprising a number of devices according to any one of the preceding claims.

## Patentansprüche

1. Vorrichtung zum automatischen Festkeilen von zylindrischen Teilen, insbesondere von Blechrollen (1) für den Transport auf einem horizontalen Träger, mit zwei schrägen Auflageflächen (2), die dazu eingerichtet sind mit der zylindrischen Fläche der eine horizontale Achse aufweisenden Rollen (1) in Berührung zu kommen, wobei wenigstens eine der Auflageflächen (2) eine Reihe von unabhängig voneinander um horizontale Achsen (4) schwenkbaren Armen (3) aufweist und jeder Arm (3) mit einem ihn in Abwesenheit einer Rolle in einer angehobenen Stellung haltenden Rückstellmittel versehen ist, dadurch gekennzeichnet, dass die Reihe wenigstens drei Arme aufweist, wobei jeder Arm sich bei Belastung mit der Rolle bis zur Anlage an einem Anschlag absenkt und die Breite der gelenkig gelagerten Arme bezüglich der Breite einer Rolle so groß ist, dass die Rolle (1) während des Transportes zumindest neben einem in der angehobenen Stellung stehenden Arm (3b) verbleibt.

2. Vorrichtung nach Anspruch 2, dadurch gekennzeichnet, dass jede Auflagefläche (2) eine Reihe von gelenkig gelagerten Armen aufweist.

3. Vorrichtung nach Anspruch 2, dadurch gekennzeichnet, dass die beiden Reihen von gelenkig gelagerten Armen jeweils die gleiche Anzahl von einander gegenüberstehenden Armen (3) aufweisen, wobei die Breite eines Armes im Wesentlichen gleich der jeweils geforderten Lagegenauigkeit der Verkeilung ist.

4. Vorrichtung nach Anspruch 2, dadurch gekennzeichnet, dass die gelenkig gelagerten Arme einer Armreihe um die halbe Armbreite bezüglich der Arme der anderen Reihe versetzt sind, wobei die halbe Breite eines Armes (3) im Wesentlichen gleich der geforderten Lagegenauigkeit der Verkeilung ist.

5. Vorrichtung nach einem der vorhergehenden Ansprüche, dadurch gekennzeichnet, dass das Rückstellmittel für einen gelenkig gelagerten Arm durch eine Feder (13) gebildet ist.

6. Vorrichtung nach einem der Ansprüche 1 bis 4, dadurch gekennzeichnet, dass das Rückstellmittel für einen gelenkig gelagerten Arm durch ein oberhalb der Schwenkachse angeordnetes Gegengewicht gebildet ist.

7. Vorrichtung nach einem der Ansprüche 1 bis 4, dadurch gekennzeichnet, dass das Rückstellmittel für einen gelenkig gelagerten Arm durch einen Arbeitszylinder gebildet ist.

8. Vorrichtung zum Festkeilen von Blechrollen hoher Temperatur nach einem der vorhergehenden Ansprüche, dadurch gekennzeichnet, dass jeder gelenkig gelagerte Arm ein hohles Rohr ist, derart, dass eine natürliche Durchlüftung sich einstellt und dass jeder gelenkig gelagerte Arm abgerundete obere Längskanten aufweist.

9. Vorrichtung nach einem der vorhergehenden Ansprüche, dadurch gekennzeichnet, dass mehrere in der Mitte einer Reihe angeordnete, einander benachbarte, gelenkig gelagerte Arme unter Ausbildung einer mittigen Platte (12) miteinander verbunden sind.

10. Güterwagen, der eine Anzahl von Vorrichtungen nach einem der vorhergehenden Ansprüche aufweist.
